# NEUE EUROPÄISCHE PATENTSCHRIFT

(11) **EP 1 664 193 B2**
(45) Veröffentlichungstag und Bekanntmachung des Hinweises auf die Entscheidung über den Einspruch: **19.10.2011**
(45) Hinweis auf die Patenterteilung: 21.02.2007
(21) Anmeldenummer: 04765728.3
(22) Anmeldetag: 01.10.2004
(51) Int. Cl.: C08L 67/00, C08L 67/02, C08J 5/06, C08J 5/10, C08K 7/02

(54) **HOLZ-KUNSTSTOFF-COMPOUND**
WOOD-PLASTIC COMPOUND
COMPOSITE BOIS-PLASTIQUE

(30) Priorität: 01.10.2003 DE 10346120
(43) Veröffentlichungstag der Anmeldung: 07.06.2006
(73) Patentinhaber: Fritz Egger GmbH & Co., 3105 Unterradlberg (AT)
(72) Erfinder: STEINWENDER, Martin, A-2380 Perchtoldsdorf (AT); SCHUBERT, Peter, A-3100 St. Pölten (AT); MUNDIGLER, Norbert, A-3430 Tulln (AT); FRECH, Hannes, A-3141 Kapelln (AT)
(74) Vertreter: Rox, Thomas
(86) Internationale Anmeldenummer: PCT/EP2004/010952
(87) Internationale Veröffentlichungsnummer: WO 2005/033204

(56) Entgegenhaltungen:
- EP-A1- 0 122 944
- EP-A1- 1 250 995
- EP-A2- 0 985 519
- EP-B1- 0 667 375
- EP-B1- 0 869 988
- DE-A- 2 324 263
- DE-A- 3 923 555
- DE-T2- 69 604 843
- DE-U1- 20 213 530
- JP-A- 2001 172 486
- US-B1- 6 207 729
- PATENT ABSTRACTS OF JAPAN Bd. 2000, Nr. 21, 3. August 2001 (2001-08-03) & JP 2001 088103 A (NIPPON SHOKUBAI CO LTD; DAIKEN TRADE & IND CO LTD), 3. April 2001 (2001-04-03)
- PATENT ABSTRACTS OF JAPAN Bd. 1998, Nr. 01, 30. Januar 1998 (1998-01-30) & JP 09 254106 A (NIPPON SHOKUBAI CO LTD; DAIKEN TRADE & IND CO LTD), 30. September 1997 (1997-09-30)
- PATENT ABSTRACTS OF JAPAN Bd. 017, Nr. 385 (M-1448), 20. Juli 1993 (1993-07-20) & JP 05 069416 A (MATSUSHITA ELECTRIC WORKS LTD), 23. März 1993 (1993-03-23)
- PATENT ABSTRACTS OF JAPAN Bd. 017, Nr. 206 (M-1400), 22. April 1993 (1993-04-22) & JP 04 348903 A (DAIKEN TRADE & IND CO LTD), 3. Dezember 1992 (1992-12-03)
- 'Handbuch der Kunststoff-Extrusionstechnik II-Extrusionsanlagen', 1986, HANSER-VERLAG Artikel 'Kapitel 7', Seiten 187 - 197
- WALTER MINK: 'Grundzüge der Extrudertechik', 1973, ZECHNER & HUETHIG VERLAG GMBH, SPEYER AM RHEIN Seiten 281 - 287

## Beschreibung

Die Erfindung betrifft ein Verfahren zur Herstellung eines plattenförmigen Formteils aus einer Formmasse, die einen Composit-Werkstoff aus Holz und Kunststoff, der auch wood-plastic-compound (WPC) genannt wird, umfasst.

Compound-Werkstoffe aus Kunststoffen und Holzmaterial und Verfahren zu deren Herstellung durch Extrusion oder Spritzguss sind bekannt. So finden solche Produkte seit vielen Jahren Anwendungen im Innen- und Außenbereich.

Die Basis solcher Compounds sind Kunststoffe wie Polyethylen (PE), high-density Polyethylen (HDPE), Polypropylen (PP), Polystyrol (PS), Polycarbonat (PC) oder Polyvinylchlorid (PVC). Diese besitzen rheologische Eigenschaften, die es erlauben, die Temperatur während der Verarbeitung gemeinsam mit dem Holz im Bereich zwischen 130 und 180°C relativ gering zu halten. Das ist notwendig, um eine thermische Schädigung des Holzes möglichst zu vermeiden.

Das Holz hat die Aufgabe, den Kunststoff zu verstärken bzw. als Füllstoff zu fungieren, ohne die Kunststoffeigenschaften im Hinblick auf die Dimensionsstabilität durch Wassereinwirkung nachhaltig negativ zu beeinflussen. Das ist vor allem für die Außenanwendung notwendig, um einen formstabilen Werkstoff zu erhalten. Als Holz kommt feinstückiges Holz, Holz in Faserform oder sogar Holzmehl zum Einsatz. Die in Tabelle 1 charakterisierte Siebfraktionenverteilung soll eine übliche Holzmischung veranschaulichen:

**Tabelle 1**

| KORNGRÖSSE | MASSE-ANTEIL |
|---|---|
| mm | % |
| X > 1,400 | 2,6 |
| 1,400 > X >1,000 | 11,5 - 11,8 |
| 1,000 > X > 0,710 | 21,2 |
| 0,710 > X > 0,500 | 23,2 |
| 0,500 > X > 0,400 | 9,2 |
| 0,400 > X > 0,315 | 11,8 |
| 0,315 > X > 0,250 | 7,2 |
| 0,250 > X > 0,125 | 7,8 |
| X > 0,125 | 5,1 |
| SUMME | 100,0 |

Das Mischungsverhältnis von Kunststoff:Holz beträgt zwischen 70:30 und 20:80 Gewichtsprozent. Als Holzrohstoff wird beispielsweise speziell dafür aufbereitetes Holz verwendet, das als Holzmehl entweder mehlartig oder zu Holzpellets verpresst eingesetzt wird.

Der Nachteil solcher Compounds ist einerseits die geringe Wärmestandfestigkeit bedingt durch die vergleichsweise geringe Schmelztemperatur der Kunststoffe und der hohe Preis.

Die Kombination von Holz- und Kunststoffmaterialien ist ferner noch aus einer Vielzahl unterschiedlicher Anwendungen bekannt.

Aus der JP 2001 088103 A ist ein Compound aus Holz und Kunststoff bekannt, der als optisch und haptisch ansprechendes Dekorationsmittel Verwendung findet und eine erhebliche Menge an Feuchtigkeit aufnehmen kann. Zur Herstellung dieses Verbunds wird ein ungesättigter Polyester und ein Methacrylat verwendet.

Ein Kunststoffmaterial, das zum Imprägnieren eines Balkens geeignet ist und den Balken langlebiger machen soll, ist in der JP 09 254106 A beschrieben. Bei dem Kunststoffmaterial handelt es sich um eine Mischung aus einem Vinylester, einem Amidharz und einem ungesättigten Polyester.

Die JP 05 069416 A betrifft ein holzhaltiges Material mit einer verbesserten Oberflächenhärte und Bruchfestigkeit. Diese Eigenschaften werden dadurch erreicht, dass vor einer WPC-Behandlung eines Furniers ein Harz aus dem Furnier herausgekocht und das Furnier anschließend getrocknet wird.

Aus der JP 04 348903 A geht ein holzhaltiges Material hervor, das hinsichtlich der Emissionen und der Bruchfestigkeit verbessert ist. Dies wird durch das Ausfüllen der inneren Porosität des Holzes durch Kunststoffe, und zwar wässriges Phenolharz und Polymerisationsharz erreicht.

Die DE 39 23 555 A1 betrifft ein Laminat mit einer Grundplatte, einem dekorativen Holz/Harz-Composit und einer mit Harz vorimprägnierten Laminatschicht. Das Holz/Harz-Composit wird durch Einbringen von Holzstücken in ein Harz gewonnen, bei dem es sich um ein wässriges, wärmeaushärtendes Harz wie ungesättigtes Polyesterharz, Polyurethanharz, Diallylphthalatharz, Epoxidharz, Silikonharz, Phenolharz oder Acrylharz handelt. Die Holzstücke bilden anschließend 10 bis 90 % der Oberfläche des Harz/Holz-Composits.

Ein Bauelement aus einzelnen mit einem Kleber aneinander geklebten Abfalllatten, die bei der Herstellung von Holzbrettern anfallen, offenbart die DE 23 24 263 A1. Die Hohlräume zwischen den einzelnen Lattenschichten können durch ein treibfähiges synthetisches Bindemittel auf Basis von Polyurethan, ungesättigtem Polyesterharz oder Epoxidharz ausgeschäumt werden.

Aus der DE 696 04 843 T2 ist ein Verfahren zur Herstellung eines Verbundschichtmaterials aus Polypropylen, einem Holzmaterial und einem anorganischen Füller bekannt. Das Verbundschichtmaterial wird durch Co-Extrusion und anschließendes Kalandrieren hergestellt.

Der Erfindung liegt nun das technische Problem zugrunde, einen hochwertigen Compound-Werkstoff mit geringen Herstellungskosten anzugeben. Dabei soll der Compound-Werkstoff insbesondere für eine Verwendung im Außenbereich geeignet sein.

In der EP 0 667 375 B1 ist ein Verfahren zur Herstellung eines plattenförmigen Formteils aus einer Formmasse aus Polyethylenterephthalat (PET) und einem Holzmaterial beschrieben, bei dem die Formmasse durch Extrusion hergestellt wird.

Es wird als Kunststoff ein synthetischer Polyester, und zwar Polyethylenterephthalat (PET), und als Holzmaterial ein Holzwerkstoff eingesetzt, der beispielsweise für die Herstellung von Spanplatten oder auch Faserplatten verwendet wird.

PET zeichnet sich durch einen hohen Schmelzpunkt (ca. 250°C) aus und verleiht dem Compound die notwendige Wärmestandfestigkeit. Zudem verfügen PET so wie Holz über polare Eigenschaften, was sich gut ergänzt und eine Oberflächenbeschichtung z.B. durch Lackieren begünstigt.

PET ist als Neuware teurer als die Kunststoffe, die gemäß dem Stand der Technik eingesetzt werden. Daher wird in bevorzugter Weise auf Abfälle aus der Kunststoffsammlung zurückgegriffen, da PET vielfach als Verpackungsmaterial für Lebensmittel verwendet wird. Ein großer Teil entfällt dabei auf Einwegflaschen, die nach einmaliger Verwendung gesammelt werden und nach entsprechender Aufbereitung wieder für die Herstellung von PET-Flaschen Annwendung finden. Die Reinigung ist aber sehr aufwändig und daher kaum konkurrenzfähig zu Neumaterial. Probleme bereiten insbesondere eingefärbte Flaschen oder auch Füllstoffe, wie sie für undurchsichtige Flaschen verwendet werden. Zudem müssen die Etiketten (z.B. aus Papier mit entsprechenden Klebern auf der Flasche fixiert) und die Schraubverschlüsse entfernt werden. Alle diese Unwegsamkeiten der Reinigung sind für den erfindungsgemäßen Compound nicht erforderlich.

Es hat sich darüber hinaus als vorteilhaft herausgestellt, einen anorganischen Füllstoff vorzusehen, der dem Compound zugemischt ist. Als anorganischer Füllstoff kommen verschiedene Materialien in Betracht: Talkum, Kreide, Titandioxid, Ziegelstaub und anorganische Färbemittel wie Eisenoxid. Die Vorteile dieser anorganischen Füllstoffe liegen in einer verbesserten Feuchtigkeitsbeständigkeit, in einem erhöhten spezifischen Gewicht und darin, dass der Compound durch die Zugabe in spezifischer Weise gefärbt werden kann.

Als weitere Substanzen können Additive vorgesehen werden, mit denen spezielle Eigenschaften erreichbar sind. So kann durch Zugabe der aus der Kunststoffherstellung bekannten Substanzen etwa die elektrische Leitfähigkeit (bspw. durch Grafit oder Blähgraphit), die UV-Beständigkeit, das Alterungsverhalten, der Geruch, die Beschichtbarkeit, die Verklebbarkeit, die Schweißbarkeit, die Zerspanbarkeit, das Brandverhalten (bspw. durch Blähgraphit, Phosphorverbindungen oder Borate) beeinflußt werden.

Durch die Zugabe von chemisch oder physikalisch wirkenden Treibmitteln können des Weiteren die Porosität und damit viele weitere physikalische Eigenschaften, vor allem aber die wärmetechnischen Eigenschaften stark beeinflusst werden. Als Beispiel für ein physiaklisch wirkendes Treibmittel kann Wasser und als Beispiel für ein chemisch wirkendes Treibmittel können AZO-Treibmittel genannt werden.

Als Mischungsverhältnis von Holz zum synthetischen Polyester hat sich der Bereich zwischen 30:70 bis 70:30 bewährt. In vorteilhafter Weise liegt das Mischungsverhältnis zwischen 60:40 und 30:70, vorzugsweise zwischen 50:50 und 30:70. Ein daraus hergestelltes Formteil zeichnet sich im Vergleich zu anderen Holz-Kunststoff-Compounds durch eine hohe Biegefestigkeit und durch eine sehr geringe Wasseraufnahme aus. Diese Eigenschaften sind um so besser verwirklicht, desto größer der Anteil an synthetischem Polyester ist.

Als Verfahren zur Herstellung eines Formteils, das zumindest teilweise aus einer zuvor beschriebenen Formmasse besteht, eignen sich die Extrusion für strangartige Formteile.

Wie bei reinen Kunststoffmischungen üblich wird zur Herstellung plattenförmiger Produkte dem Extruder eine Kalandriereinrichtung oder eine Doppelbandpresse nachgeschaltet um eine verbesserte Verteilung der Formmasse und damit eine höhere Maßgenauigkeit, eine verbesserte Oberflächengüte und verringerte Eigenspannungen der Werkstücke zu erzielen.

Eine Veredelung des Formteils aus dem Holz-Kunststoff-Compound kann vor allem durch die verschiedenen Möglichkeiten der Beschichtung erreicht werden.

So hat sich gezeigt, dass unter Berücksichtigung der geringsten Wasseraufnahme, der Holz-PET-Compound auch zum Kaschieren geeignet ist, also als Träger für Laminate und Imprägnate, für sonstige Folien, beispielsweise auch aus Metall, für Karton, für Leder, für Linoleum, für Kork oder für Holz, insbesondere Furnier etc., dienen kann. Je nach deren Verhalten gegenüber Feuchtigkeit können wasserfreie Klebesystemen erforderlich sein. Eine Applizierung kann nach den aus dem Stand der Technik bekannten Verfahren kontinuierlich oder im Kurztakt erfolgen.

Durch die gute Wärmestandfestigkeit des PET ist bei geeigneter Einstellung der elektrischen Leitfähigkeit, etwa durch Zugabe von Grafit, auch eine ausgezeichnete Eignung zur Pulverbeschichtung gegeben.

Ebenso kann eine Beschichtung in flüssiger Form aufgebracht werden, beispielsweise als Farb- oder Lackauftrag oder als Auftrag aus einem Kunstharz.

Die Formmasse der zuvor beschriebenen Art wird zu plattenförmigen Formteilenverarbeitet werden, die insbesondere als Wandbelag, Deckenbelag oder Fußbodenbelag verwendet werden. Dabei bietet die Formmasse in besonderem Maße Vorteile bei der Anwendung im Nassbereich, da erstmals eine wirtschaftliche Möglichkeit besteht ein Material mit beliebiger Beschichtung herzustellen. Keramische Beläge, die hier sonst üblich sind, können beispielsweise nicht mit gedruckten Dekoren versehen werden.

Neben speziellen Anforderungen im Innenausbau können solche aber auch im Außenbereich erfüllt werden, vorteilhafter Weise vor allem dort, wo dekorative Gestaltung, Witterungsbeständigkeit und gleichzeitig günstige Festigkeitseigenschaften benötigt werden.

Für den jeweiligen Einsatz kann es sinnvoll sein entsprechende Randprofile an den Kanten der Platten vorzusehen. Diese können gleich im Zuge der Herstellung geformt werden oder wie bei herkömmlichen Plattenwerkstoffen auch, durch nachträgliches, zumeist spanendes Bearbeiten.

Hochfeste Plattenwerkstoffe, mit günstigen wärmetechnischen Eigenschaften können durch die Anwendung entsprechender Treibmittel erreicht werden.

Speziell bei strangförmigen Produkten die nicht Gegentstand der Erfindung sind, die für den Außenbereich vorgesehen sind kann es sinnvoll sein eine Beschichtung mit einem Kunststoff durch Koextrusion zu applizieren. Ein verbesserter Witterungsschutz kann so erzielt werden.

### Beispiel:

Bei einem von der Erfindung nicht umfassten Beispiel wird Holz mit einer Siebkennlinie nach Tabelle 1 mit PET-Flakes gemischt. Das Holz stammt aus einer industriellen Produktionslinie für Spanplatten und wird nicht speziell aufbereitet. Die Feuchtigkeit liegt um ca. 2%. Die PET-Flakes stammen aus geshreddertem PET-Flaschenmaterial. Etiketten, Verschlüsse und Restverunreinigungen durch das darin befindliche Lebensmittel (Softdrinks) wurden zuvor nicht entfernt. Die Mischungsverhältnisse Holz zu PET betrugen 50:50 (HP 03), 40:60 (HP 02) und 30:70 (HP 01).

Aus dem Gemisch wurde mit einem Extruder ein Granulat hergestellt, welches eine mittel- bis dunkelbraune Farbe aufweist. Aus dem so erhaltenen Granulat wurden plattenförmige Spritzgussteile (ca. 15x15x0,5 cm³) hergestellt, die nach Lagerung im Normklima (23°C, 50% relative Luftfeuchtigkeit) für 14 Tage folgende Eigenschaften aufweisen:

**Tabelle 2**

| Rezept | HP 01 | HP 02 | HP 03 |
|---|---|---|---|
| Biegefestigkeit [N/mm2] | 64,24 | 85,53 | 92,37 |
| Schlagzähigkeit [kJ/m²] | 4,549 | 5,323 | 5,550 |
| Dichte [g/cm3] | 1,345 | 1,365 | 1,345 |
| 2h Wasser ¹⁾ Quellung [%] | 0,3 | 0,4 | 0,4 |
| 24h Wasser ¹⁾ Quellung [%] | 0,5 | 0,7 | 0,9 |
| 2h Spülm. ²⁾ Quellung [%] | 0,4 | 0,2 | 0,5 |
| 24h Spülm. ²⁾ Quellung [%] | 0,6 | 0,5 | 1,0 |
| Bemerkungen | Holz/PET 30/70 G/G % | Holz/PET 40/60 G/G % | Holz/PET 50/50 G/G % |

| | | | |
|---|---|---|---|
| 1) Quellverhalten bei Lagerung in Wasser 2h und 24h, sowie bei 2) Lagerung in Spülmittellösung 20g in 11 Wasser; Spülmittel: BULSAN Seifenreiniger | | | |

Zusätzlich wurden Proben der Rezeptur HP 03 einer künstlichen Bewitterung gemäß Tabelle 3 und einer Prüfung der Kantenquellung nach EN 13329 unterzogen.

Die Auswirkung der künstlichen Bewitterung auf die mechanischen Eigenschaften enthält die Tabelle 4.

**Tabelle 3**

| Zyklen der künstlichen Bewitterung: | | | |
|---|---|---|---|
| Schritt | Funktion | Temperatur | Dauer |
| 1 | Kondensation | 45° | 24h |
| 2 | Unterzyklus Schritt 3+4 | | 48x |
| 3 | UV-Beleuchtung | 60° | 2,5h |
| 4 | Besprühphase | | 0,5h |
| 5 | Beginn mit Schritt 1 | | |

Erläuterung / Technische Daten:
- die Temperatur bei UV-Beleuchtungsphase beträgt 60°C.
- die Temperatur bei der Kondensationsphase ist 45°C.
- Beleuchtungsstärke der UV-Lampen beträgt 0,77 W/m².
- das Besprühen der Proben bei Besprühphase (Regen) erfolgt mit normaler Wassertemperatur.
- Gesamtdauer pro Zyklus: 168h
- Gesamtdauer: 2016h (12 Wochen) bei 12-maliger Wiederholung des Zyklus.

**Tabelle 4**

| Veränderungen der Biegefestigkeit und der Schlagzähigkeit nach 400h, 1000h und 2016h künstlicher Bewitterung: | |
|---|---|
| Rezeptur | HP 03 |
| Biegefestigkeit nach 400h | - 8 % |
| Biegefestigkeit nach 1000h | - 13 % |
| Biegefestigkeit nach 2016h | - 18 % |
| Schlagzähigkeit nach 400h | kein signifikanter Zusammenhang gegeben |
| Schlagzähigkeit nach 1000h | kein signifikanter Zusammenhang gegeben |
| Schlagzähigkeit nach 2016h | kein signifikanter Zusammenhang gegeben |

Die Kantenquellung gemessen nach EN 13329 der Mischung HP 03 (50% Holz / 50% PET) ergab Werte kleiner 2%.

## Patentansprüche

1. Verfahren zur Herstellung eines plattenförmigen Formteils aus einer Formmasse,
- bei dem die Formmasse aus einem thermoplastischen Kunststoff und einer Verstärkungskomponente gebildet wird,
- bei dem als thermoplastischer Kunststoff ein Polyethylenterephthalat (PET) und als Verstärkungskomponente ein Holzmaterial verwendet wird,
- bei dem die Formmasse durch Extrusion hergestellt wird und
- bei dem mittels einer dem Extruder nachgeschalteten Kalandriereinrichtung oder Doppelbandpresse das Formteil nachbearbeitet wird.

2. Verfahren nach Anspruch 1,
**dadurch gekennzeichnet,**
**dass** mindestens eine Oberfläche des Formteils mit einer Beschichtung versehen wird.

3. Verfahren nach Anspruch 2,
**dadurch gekennzeichnet,**
**dass** die Oberfläche mit einem Laminat, mit einem Imprägnat, mit einer Folie, insbesondere Metallfolie, mit Karton, mit Leder, mit Linoleum, mit Kork oder mit Holz, insbesondere mit Furnier, kaschiert wird.

4. Verfahren nach Anspruch 2,
**dadurch gekennzeichnet,**
**dass** die Oberfläche mit einer Pulverbeschichtung beschichtet wird.

5. Verfahren nach Anspruch 2,
**dadurch gekennzeichnet,**
**dass** die Beschichtung in flüssiger Form aufgebracht wird.

6. Verfahren nach Anspruch 5,
**dadurch gekennzeichnet,**
**dass** als Flüssigkeit ein Farbauftrag, ein Lack oder ein Kunstharz aufgebracht wird.

7. Verfahren nach Anspruch 2,
**dadurch gekennzeichnet,**
**dass** mittels Koextrusion eine Beschichtung aus einem Kunststoff aufgebracht wird.

## Claims

1. Method for producing a plate-shaped moulded part from a moulding compound,
- in which the moulding compound consists of a thermoplastic synthetic material and a reinforcing component,
- in which a polyethylene terephthalate (PET) is used as the thermoplastic synthetic material and a wood material is used as the reinforcing component,
- in which the moulding compound is produced by extrusion and
- in which the moulded part is machine finished by means of a calendering device or double-belt press downstream from the extruder.

2. Method according to Claim 1, **characterised in that** at least one surface of the moulded part is provided with a coating.

3. Method according to Claim 2, **characterised in that** the surface is covered with a laminate, with an impregnating material, with a foil, in particular a metal foil, with cardboard, with leather, with linoleum, with cork or with wood, in particular with veneer.

4. Method according to Claim 2, **characterised in that** the surface is coated with a powder coating.

5. Method according to Claim 2, **characterised in that** the coating is applied in liquid form.

6. Method according to Claim 5, **characterised in that** a coating of paint, a lacquer or a synthetic resin is applied as the liquid.

7. Method according to Claim 2, **characterised in that** a coating made of a plastic material is applied by means of co-extrusion.

## Revendications

1. Procédé de fabrication d'une pièce moulée, en forme de plaque, à partir d'une matière à mouler,
- dans lequel la matière à mouler consiste en un matériau thermoplastique et en un composant de renfort,
- dans lequel on utilise, en tant que matériau thermoplastique, un polyéthylène téréphtalate (PET) et, en tant que composant de renfort, un matériau à base de bois,
- dans lequel la matière à mouler est fabriquée par extrusion,
- dans lequel la pièce moulée est soumise à un traitement ultérieur au moyen d'une installation de calandrage ou d'une presse à double bande, connectée en aval de l'extrudeuse.

2. Procédé selon la revendication 1, **caractérisé en ce qu'**au moins une surface de la pièce moulée est pourvue d'un revêtement.

3. Procédé selon la revendication 2, **caractérisé en ce que** la surface est recouverte avec un aggloméré laminé, avec un revêtement imprégné, avec une feuille, en particulier avec une feuille métallique, avec du carton, avec du cuir, avec du liège ou avec du bois, en particulier avec du contreplaqué.

4. Procédé selon la revendication 2, **caractérisé en ce que** la surface est recouverte d'un revêtement en forme de poudre.

5. Procédé selon la revendication 2, **caractérisé en ce que** le revêtement est appliqué sous la forme d'un liquide.

6. Procédé selon la revendication 5, **caractérisé en ce que**, comme liquide, on applique une matière colorante, une laque ou une résine synthétique.

7. Procédé selon la revendication 2, **caractérisé en ce qu'**un revêtement de matière plastique est appliqué par co-extrusion.
